# EUROPEAN PATENT SPECIFICATION

(11) **EP 0 371 708 B1**
(45) Date of publication and mention of the grant of the patent: **10.05.1995**
(21) Application number: 89312227.5
(22) Date of filing: 24.11.1989
(51) Int. Cl.: H04M 1/02

(54) **An intermediate chassis for a mobile telephone handset**
Zwischenrahmen für einen mobilen Telefonhandapparat
Châssis intermédiaire pour combiné de téléphone mobile

(30) Priority: 30.11.1988 FI 885568
(43) Date of publication of application: 06.06.1990
(73) Proprietor: NOKIA MOBILE PHONES LTD., 24101 Salo (FI)
(72) Inventor: Jokinen, Tauno Jaakko, SF-90570 Oulu (FI)
(74) Representative: Cross, Rupert Edward Blount

(56) References cited:
- WO-A-87/04317
- FR-A- 2 448 263
- US-A- 3 627 930
- US-A- 4 124 785
- US-A- 4 291 202
- US-A- 4 717 989
- TELCOM REPORT vol. 7, no. 2, 1984, PASSAU, DE pages 141 - 146; GRESKA, HOHER, RITZ: 'Siemens Miniset 200 - ein Kompaktfernsprecher für überall'
- TELCOM REPORT vol. 8, no. 4, 1985, BERLIN, DE pages 247 - 253; BECKER: 'Teilnehmergerät für das Funkfernsprechsystem'
- FUNKSCHAU no. 9, 1987, MUNCHEN, DE pages 39 - 42; BECKER: 'Hinter den Kulissen'
- TELCOM REPORT SONDERHEFT NACHRICHTENUBERTRAGUNG AUF FUNKWEGEN vol. 9, 1986, DE pages 319 - 325; KOCH, NOTHNAGEL, THOMFOHRDE: 'Technische und konstruktive Gesichtspunkte bei der Gestaltung von Mobilstationen'

## Description

The invention relates to an intermediate chassis for a mobile telephone handset, around which chassis the electronics components and other components of the handset are assembled.

When the handsets of mobile telephones, for example automobile radio telephones, are being assembled, it is necessary to check and test them at the assembling stage, before they are enclosed in an exterior casing, usually a plastic casing. The exterior casing is made up of two or more parts pressed or cast into form, the parts being attached by a screw joint, for example. In order that the handset could be tested in a partial assembly as easily and rapidly as possible, it is nowadays common to assemble the electronics components around a plastic intermediate chassis structure at an early stage of production. The intermediate chassis comprises a sheet-like piece made of a plastic material, or more commonly a frame which may have one or more transverse intermediate supports. The circuit cards to which the electronics components are installed are secured to the intermediate chassis on both sides, and the electric connections are made so that this partial assembly will constitute a fully functioning apparatus which can be tested. It is easy to carry out the inspection, since the handling of a unified partial assembly is easy. The repairing of defective units at this stage is rather easy. The exterior casing of the product is then installed around the accepted and functioning units. A method such as this has the further advantage that different kinds of exterior casings can be installed around one and the same partial assembly, whereby products of different outer appearances are obtained. It is known that the exterior design of a product has great importance in marketing.

The development of mobile telephones indicates that at least partly intelligent handsets will become more common. Likewise, the cabling between the radio unit and the hand-set will become an important factor of installation and costs.

When the aim is to achieve a cable which is as simple as possible, and when at the same time the electronics of the handset are becoming increasingly complicated, the interference factors in the device will be an important factor, and along with this the questions of grounding and of shielding from interference will become increasingly important. It is known in the art to use for interference shielding various casing systems and various systems for metal-coating of plastic parts, in which case that circuit section which causes interference can be enclosed in a metal casing or hood, or the exterior casing of the device may have metal-coated walls in such a manner that, when the device is assembled they surround a certain part of the circuit card of the handset. Since the processor of the handset, together with the TX signal radiating from the antenna, produces RF-interference, it has been necessary to use multiple-layer circuit card systems in order to eliminate the interference. With the use of double-layer circuit cards, the providing of efficient grounding also constitutes a problem as the component density increases.

The use of a metal intermediate chassis in an integral telephone set and handset has been disclosed in GB-2043396. The intermediate chassis forms the substrate of a printed circuit board and is coated with porcelain.

The problem of providing shielding against RF interference whilst still allowing easy inspection of components is not addressed in this document.

In US-4717989 the problem of providing RF shielding for components in a portable radio transceiver is addressed by providing a metallic module base and cover plate to which a flexible circuit is adhesively bonded. Thus this document does not address the problem of providing shielding against RF interference whilst still allowing easy inspection of components in a mobile telephone handset.

In order to eliminate the interference caused by the handset processor and the TX signal radiating from the antenna in a mobile telephone handset and to allow easy access to the components the present invention provides an intermediate chassis for a mobile telephone handset, to which chassis the handset circuit cards with their components, as well as other necessary functional components, are secured, allowing the handset to be tested before the installation of exterior casings (1, 2), the intermediate chassis (6) comprising a substantially continuous metal sheet having a centre section (6a) lying in a plane, and a substantially continuous edge strip (6b, 6c) formed to extend in a plane substantially perpendicular to the plane of said centre section (6a), said edge strip (6b, 6c) having lugs and/or clasps (8) on an inner face thereof adapted to secure said functional components and circuit cards therebetween, wherein said intermediate chassis (6) provides efficient grounding and a basis for interference shielding for said functional components and circuit cards.

By making the intermediate chassis from metal it is possible to accomplish efficient grounding for the handset. A metal intermediate chassis may be made either by casting or by pressing it from a suitable metal blank.

An example of the invention will now be described in greater detail with reference to the accompanying figures, in which
Figure 1 depicts an exploded view of a radio telephone,
Figure 2 depicts a cross section of a radio telephone having an intermediate chassis of metal.

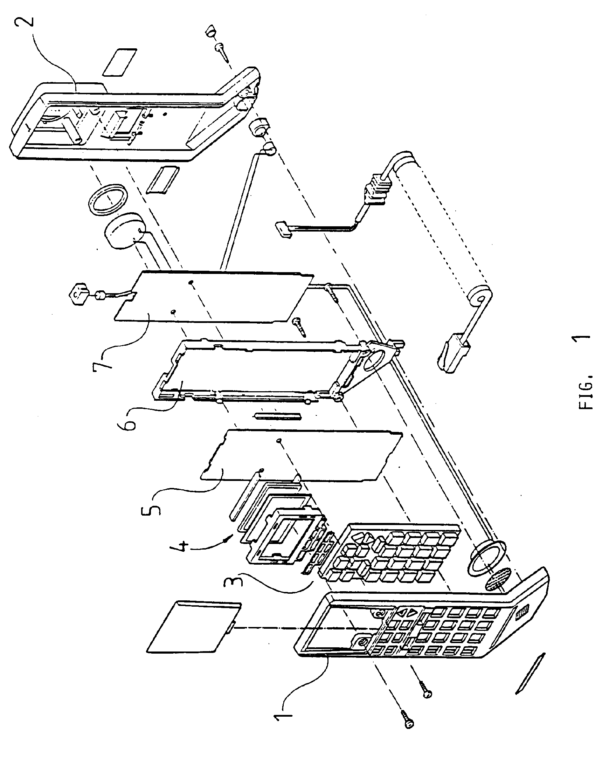

Figure 1 shows an exploded view of an example of the use of an intermediate chassis. The figure depicts a radio telephone having a first casing part 1 made of a plastic material, having openings for the keys of the keyboard 3 and for the display 4, and a second casing part 2 made of a plastic material, having suitably shaped areas for the microphone and the amplifier. When the device is assembled, the casing parts 1 and 2 enclose two circuit cards 5 and 7, together with the components on them. The circuit cards 5, 7 are secured to the metal intermediate chassis 6, on its opposite sides. The intermediate chassis is a sheet-like piece made by casting, or preferably by pressing, in which the edge parts of the sheet may be bent so that there is formed a continuous edge strip which is substantially broader than the sheet thickness and the plane of which is perpendicular to the plane of the sheet. The edge strip and the continuous flat plane area of the piece form a two-sided "vessel-like" space in which the circuit cards can be installed. It is possible to arrange in the intermediate chassis suitable lugs or clasps, to which the circuit cards, the various necessary components such as an amplifier and a display panel, and the casing parts 1 and 2 of the device can be secured. At one edge of the edge strip of the intermediate chassis it is possible to form a suitable trough parallel to the edge; into this trough it is possible to snap shut an RF-shielding cover the edge part of which has a corresponding trough, and thus to RF-shield the circuit card 7 either in part or in whole.

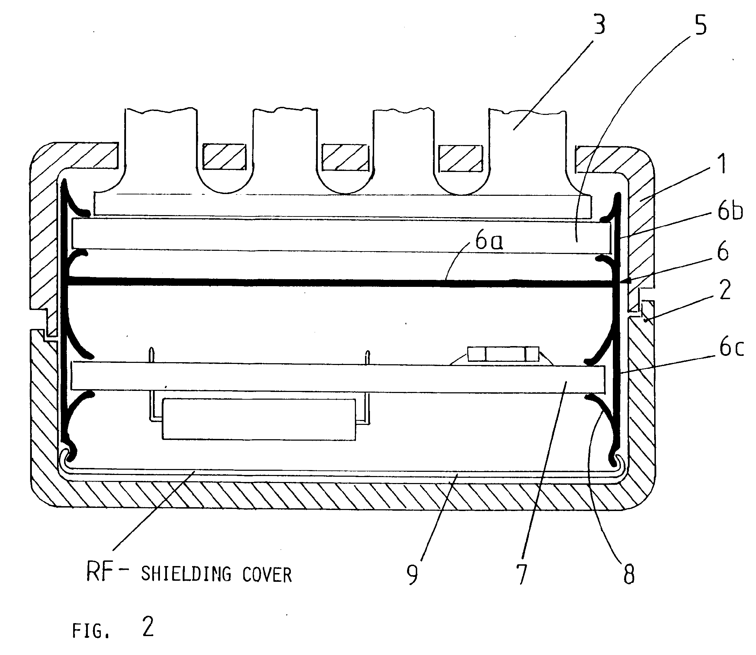

The cross section in Figure 2 shows clearly the purpose of the intermediate chassis 6. In this embodiment, the cross-sectional shape of the intermediate chassis 6 is an H-profile. The intermediate chassis has a flat, substantially continuous metal center section 6a, and edge sections 6b and 6c, which are substantially perpendicular to the plane of the center section and form the above-mentioned edge strip. Both edge sections 6a and 6b have flexible clasp fasteners 8, to which circuit card 7 and circuit card 5 can be secured. Circuit card 7 contains the processor, which causes RF-interference. The keyboard and display circuits are located on circuit card 5.

When the RF-shielding cover 9 is snapped shut onto the intermediate chassis, an RF-shielding casing is formed which is delimited on the one hand by the intermediate chassis 6 and on the other hand by the shielding cover 9. The shielding cover must cover at least the processor and its data and control channels.

By making, in accordance with the invention, the intermediate chassis from metal, certain important advantages are gained. The metal intermediate chassis enables efficient grounding to be obtained for the handset, and its serves as a good basis for the interference shielding of the device. The circuit cards can be secured to the intermediate chassis by soldering at the normal wave-soldering work stage. Since, owing to interference caused by the processor, it has been necessary to use multi-layer circuit card systems, it is possible, by making in accordance with the invention the intermediate chassis from metal, to use a less expensive double-layer circuit card and thus to achieve economical savings.

The invention by no means restricts the shape of the intermediate chassis. Thus it can be made to be of a shape substantially different from the preferred embodiment described above, for example to have a U-shaped cross sectional profile, and it may have different fasteners or stops, according to the need at any given time.

## Claims

1. An intermediate chassis for a mobile telephone handset, to which chassis the handset circuit cards with their components, as well as other necessary functional components, are secured, allowing the handset to be tested before the installation of exterior casings (1, 2), the intermediate chassis (6) comprising a substantially continuous metal sheet having a centre section (6a) lying in a plane, and a substantially continuous edge strip (6b, 6c) formed to extend in a plane substantially perpendicular to the plane of said centre section (6a), said edge strip (6b, 6c) having lugs and/or clasps (8) on an inner face thereof adapted to secure said functional components and circuit cards therebetween, wherein said intermediate chassis (6) provides efficient grounding and a basis for interference shielding for said functional components and circuit cards.

2. An intermediate chassis according to claim 1, characterized in that said intermediate chassis (6) has a cross sectional shape of an H-profile.

3. An intermediate chassis according to claim 1, characterized in that said intermediate chassis (6) has a cross sectional shape of a U-profile.

4. An intermediate chassis according to claim 1, characterized in that said intermediate chassis (6) is made from metal by pressing or by casting.

5. An intermediate chassis according to any preceding claim, characterized in that one or more RF-shielding covers (9) are provided to be secured to said intermediate chassis (6) so that edge parts of the RF-shielding cover (9) attach to said edge strips (6b, 6c) of said intermediate chassis (6), whereby enclosed RF-shielded areas are formed which are delimited by said intermediate chassis (6) and said RF-shielding cover (9).

## Patentansprüche

1. Ein Zwischenrahmen für einen mobilen Telefonhandapparat, wobei an dem Rahmen die Schaltungskarten des Handapparats mit ihren Bauteilen sowie andere notwendige funktionale Komponenten befestigt sind, wodurch der Handapparat vor dem Zusammenbau des äußerer Gehäuses (1, 2) geprüft werden kann, wobei der Zwischenrahmen (6) ein im wesentlichen durchgehendes, flächiges Element aus Metall umfaßt, das einen mittleren Abschnitt (6a), der in einer Ebene liegt, und einen im wesentlichen durchgehenden Randstreifen (6b, 6c) aufweist, der gebildet ist, daß er sich in einer Ebene im wesentlichen senkrecht zu der Ebene des genannten mittleren Abschnittes (6a) erstreckt, wobei der genannte Randstreifen (6b, 6c) Nasen und/oder Klammern (8) auf seiner Innenseite hat, die die genannten funktionalen Komponenten und Schaltungskarten dazwischen befestigen können, wobei der genannte Zwischenrahmen (6) eine wirksame Erdung und eine Basis für eine Störabschirmung von den genannten funktionalen Bauteilen und Schaltungskarten schafft.

2. Ein Zwischenrahmen gemäß Anspruch 1, **dadurch gekennzeichnet**, daß der genannte Zwischenrahmen (6) eine Querschnittsform eines H-Profils aufweist.

3. Ein Zwischenrahmen gemäß Anspruch 1, **dadurch gekennzeichnet**, daß der genannte Zwischenrahmen (6) eine Querschnittsform eines U-Profils aufweist.

4. Ein Zwischenrahmen gemäß Anspruch 1, **dadurch gekenn****zeichnet**, daß der genannte Zwischenrahmen (6) aus Metall durch Pressen oder durch Gießen hergestellt ist.

5. Ein Zwischenrahmen gemäß irgendeinem vorhergehenden Anspruch, **dadurch gekennzeichnet**, daß eine oder mehrere HF-Abschirmungsabdeckungen (9) vorgesehen sind, an dem genannten Zwischenrahmen (6) so befestigt zu werden, daß Randteile der HF-Abschirmungsabdeckung (9) an den genannten Randstreifen (6b, 6c) des genannten Zwischenrahmens (6) anbringbar sind, wodurch geschlossene, HF-mäßig abgeschirmte Bereiche gebildet werden, die durch den genannten Zwischenrahmen (6) und die genannte HF-Abschirmungsabdeckung (9) begrenzt sind.

## Revendications

1. Châssis intermédiaire pour un combiné de téléphone mobile, auquel châssis sont fixées les cartes de circuit du combiné avec leurs composants, de même que d'autres composants fonctionnels nécessaires, en permettant que le combiné soit testé avant la mise en place de boîtiers extérieurs (1, 2), le châssis intermédiaire (6) comprenant : une feuille métallique sensiblement continue ayant une section centrale (6a) se trouvant dans un plan, et une bande latérale sensiblement continue (6b, 6c) conformée de manière à s'étendre dans un plan sensiblement perpendiculaire au plan de ladite section centrale (6a), ladite bande latérale (6b, 6c) comportant, sur sa face interne, des saillies et/ou des pattes (8) conçues pour fixer, entre elles, lesdits composants fonctionnels et lesdites cartes de circuit ; ledit châssis intermédiaire (6) procurant auxdits composants fonctionnels et auxdites cartes de circuit une mise à la masse efficace et une base pour le blindage contre les parasites.

2. Châssis intermédiaire selon la revendication 1, caractérisé en ce que ledit châssis intermédiaire (6) a, en section transversale, un profil en H.

3. Châssis intermédiaire selon la revendication 1, caractérisé en ce que ledit châssis intermédiaire (6) a, en section transversale, un profil en U.

4. Châssis intermédiaire selon la revendication 1, caractérisé en ce que ledit châssis intermédiaire (6) est fait de métal travaillé à la presse ou coulé.

5. Châssis intermédiaire selon l'une quelconque des revendications précédentes, caractérisé en ce qu'une ou plusieurs enveloppes (9) de blindage contre les interférences radioélectriques sont prévues pour être fixées audit châssis intermédiaire (6) de sorte que les parties latérales de l'enveloppe (9) de blindage contre les interférences radioélectriques se fixent auxdites bandes latérales (6b, 6c) dudit châssis intermédiaire (6), ce par quoi sont formées des zones closes blindées aux interférences radioélectriques qui sont délimitées par ledit châssis intermédiaire (6) et ladite enveloppe (9) de blindage contre les interférences radioélectriques.
